(19) Europäisches Patentamt
European Patent Office
Office européen des brevets

(11) **EP 2 426 476 A1**

(12) **EUROPEAN PATENT APPLICATION**

(43) Date of publication:
**07.03.2012 Bulletin 2012/10**

(51) Int Cl.:
***G01N 15/06*** *(2006.01)*

(21) Application number: **11179002.8**

(22) Date of filing: **26.08.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **07.09.2010 JP 2010199909**

(71) Applicant: **NGK Insulators, Ltd.
Nagoya-shi, Aichi 467-8530 (JP)**

(72) Inventors:
• **Yokoi, Shoji**
  **Nagoya-shi, Aichi 467-8530 (JP)**
• **Sakurai, Takayuki**
  **Nagoya-shi, Aichi 467-8530 (JP)**

(74) Representative: **Paget, Hugh Charles Edward et al
Mewburn Ellis LLP
33 Gutter Lane
London
EC2V 8AS (GB)**

(54) **Particulate matter detection device**

(57) There is disclosed a particulate matter detection device which can accurately detect a particulate matter by use of a sensor circuit having a simple constitution. A particulate matter detection device (100) includes characteristics measurement means (20) having a voltage applying circuit (22) which applies a voltage signal of a sine wave obtained by tuning a voltage signal of a square wave with a low pass filter having a Q-value of 1.5 to 3, a current-voltage conversion circuit (26) which converts the applied voltage into a current, a detection circuit (23) which decomposes an output of the current-voltage conversion circuit (26) into orthogonal components by synchronous wave detection of two or more phases, to detect the output, and two or more calibration elements (24a and 24b) electrically connected to the voltage applying circuit (22) and the current-voltage conversion circuit (26) in a state where the calibration elements and the pair of measurement electrodes (12a,12b) are switchable, and the device calculates a calibration matrix Q of the voltage applying circuit (22) from two or more calibrating detection values measured by using two or more calibration elements (24a and 24b), respectively, and original true values of the two or more calibration elements, to calibrate a detected value measured between the pair of measurement electrodes (12a and 12b) in the particulate matter detection device (100).

EP 2 426 476 A1

**Description**

BACKGROUND OF THE INVENTION

Field of the Invention

The present invention relates to a particulate matter detection device, and more particularly, it relates to a particulate matter detection device which can accurately detect a particulate matter by use of a sensor circuit having a simple constitution.

Description of the Related Art

A flue exhaust gas or a diesel engine exhaust gas includes a particulate matter (PM) such as soot, which has been a cause for air pollution. For removing the particulate matter, a filter (a diesel particulate filter: DPF) made of a ceramic material or the like has widely been used. The DPF made of the ceramic material can be used for a long period of time, but defects such as cracks or melting damages due to thermal deterioration or the like are generated sometimes, and a micro amount of the particulate matter might leak. When such defects are generated, from the viewpoint of the prevention of the air pollution, it is remarkably important to immediately detect the generation of the defects and recognize the abnormality of a device.
As a method of detecting the generation of such defects, there is disclosed a method of disposing a particulate matter detection device on a downstream side of the DPF (see e.g. Patent Document 1).
In the invention disclosed in Patent Document 1, a particulate matter is charged by corona discharge, to measure an ion current thereof, thereby measuring an amount of the particulate matter. Consequently, in the method of charging the particulate matter to measure the ion current thereof, the ion current to charge the particulate matter is weak, and hence a large-scale detection circuit is required for detecting the weak ion current, whereby the method becomes expensive. Moreover, when an exhaust gas has a high flow rate, it is difficult to effectively charge the particulate matter. Therefore, a measured value of the particulate matter is smaller than a value of the amount of the particulate matter actually included in the exhaust gas, and an error of the value becomes large.
To solve this problem, there is suggested a particulate matter detection device or the like including a detection device main body which has a through hole formed in one end thereof and which is long in one direction, and at least a pair of electrodes embedded in walls forming the through hole and covered with a dielectric material. It is possible to electrically adsorb the particulate matter in the exhaust gas by the wall surface of the through hole. When a change of electric characteristics of the walls which form the through hole is measured, a mass of the particulate matter adsorbed by the wall surface of the through hole can be detected (see Patent Document 2).
Such a conventional particulate matter detection device measures, for example, an electrostatic capacity as the above electric characteristics, and can calculate the mass of the particulate matter from a change amount of this electrostatic capacity. Moreover, a detection method which utilizes this measurement of the electrostatic capacity is also utilized in, for example, a passenger detection system or detection method for a car or the like (see e.g. Patent Document 3).
Moreover, in the detection method which utilizes the electrostatic capacity, there is also suggested a process of decreasing an influence of a leak current (see e.g. Patent Document 4). Also in the particulate matter detection device, an electrostatic shield is preferably utilized to decrease the leak current in a cable connector and decrease an influence of noise coming from the outside, and it becomes necessary to apply a current-voltage conversion circuit (also referred to as "the I-V conversion circuit") disclosed in Patent Document 4.
In a case where this current-voltage conversion circuit is used and a square-wave signal generation circuit having high economic properties (also referred to simply as "the square-wave generation circuit") as disclosed in Patent Document 3 is applied, however, when a measurement object is an electrostatic capacity load, a detection current has a differential waveform of the square wave. In consequence, a spike-like waveform is generated in an effective signal amplitude at a change timing of the square-wave signal, and it becomes remarkably difficult to process the signal.
Therefore, in a conventional detection method utilizing the measurement of an electrostatic capacity, when the process disclosed in Patent Document 4 is applied, a sine-wave signal generation circuit has been required. Moreover, as an example of a factor for using the sine wave, the square wave includes an odd-order high harmonic wave, and hence when a phase detection element (PSD) including an inexpensive switching system having a high accuracy is utilized in a detection circuit, it becomes difficult to remove high harmonic components.
However, as the above sine-wave generation circuit, a complicated circuit including a combination of a band pass filter and a feedback circuit, a combination of a tuning circuit and the feedback circuit or the like is required. Moreover, when it is further necessary to regulate the circuit, cost burdens become large. Furthermore, also when a reference signal to operate a PSD switch of the switching system on a detection side is generated, an additional circuit of a comparator or the like is further required. In consequence, the sine-wave generation circuit is a remarkably high-cost generation circuit as compared with the square-wave generation circuit, and is inadequate as, for example, a generation circuit of a particulate matter detection device for a DPF which has a limited installation space and which is requested to be inexpensive.

Consequently, there is suggested, for example, a method of using, for the square-wave generation circuit, a low pass filter having frequency characteristics to lower a frequency which is not lower than the frequency of the circuit, thereby removing the above odd-order high harmonic wave. Moreover, this frequency is tuned with the low pass filter, to obtain a filter having a high quality factor value (Q-value) of the low pass filter, whereby the order of the filter is decreased, and a circuit scale can be made small.

However, when the above low pass filter is used, the filter is tuned with an oscillation frequency. Therefore, the filter is easily influenced by variation of an element for use in the low pass filter or a temperature change. In consequence, an amplitude change of the sine wave or a phase change between a reference signal and the sine wave occurs, and measurement accuracy deteriorates sometimes. Especially in the case of a device for detecting a particulate matter in an exhaust gas discharged from a car, the temperature of environment drastically changes. Therefore, the filter is easily influenced by the above measurement accuracy deterioration sometimes.

That is, when the inexpensive square-wave generation circuit and the low pass filter are used, the sine wave can comparatively be oscillated at low cost, but there separately occurs a problem that an error is generated in the above sensor circuit.

It is to be noted that there is also suggested, for example, a method of connecting, to a usual detection device, an element having a value corresponding to a sensitivity of a sensor detecting portion, to correct the sensitivity of the sensor detecting portion (see Patent Document 5).

[Patent Document 1] JP-A-60-123761
[Patent Document 2] JP-A-2009-186278
[Patent Document 3] JP-A-11-271463
[Patent Document 4] JP-A-2006-201129
[Patent Document 5] JP-A-2010-96743

SUMMARY OF THE INVENTION

Also in a particulate matter detection device for detecting a particulate matter in an exhaust gas as in an electrostatic passenger detection device disclosed in Patent Document 5, calibration or correction is required, but it is a sensor circuit part that requires the calibration, and it is impossible to apply a method disclosed in Patent Document 5.

That is, an error in a case where a square-wave generation circuit and a low pass filter are used is an error generated in a sensor circuit. On the other hand, the correction method disclosed in Patent Document 5 corrects a sensor detecting portion. Therefore, even when the method disclosed in Patent Document 5 is applied, it is not possible to eliminate the error in the case where the square-wave generation circuit and the low pass filter are used.

It is to be noted that when the sensor circuit of the particulate matter detection device is connected to a calibrating element in which a phase and an amplitude are known, the calibration can be performed in the sensor circuit, but in this case, calculation for performing the calibration is remarkably complicated. For example, a detected value is decomposed into a real-number component and an imaginary-number component, and each component requires the calculation of

square root ($\sqrt{\phantom{x}}$), arctangent ($\tan^{-1}$), and sine (sin) or cosine (cos) for the correction.

In particular, when the above complicated calibration is performed for each measurement, a load on a processing device of a computer which performs data processing such as each calculation, for example, a central processing unit (CPU) is so large that the central processing unit having a high performance is required. Conversely, cost of the detection device increases.

That is, in the particulate matter detection device for detecting the particulate matter included in the exhaust gas or the like, a sensor circuit which sufficiently satisfies both cost reduction and accurate measurement has not been suggested yet, and there has been demanded the development of a device which can perform the accurate measurement while using an inexpensive sensor circuit having a simple constitution.

The present invention has been developed in view of the above problem, and an object thereof is to provide a particulate matter detection device which can accurately detect a particulate matter by use of a sensor circuit having a simple constitution.

The present inventors have intensively performed investigations and have eventually found that when correction (calibration) is performed by using two or more different calibration elements in a particulate matter detection device including a generation circuit using a square-wave generation circuit and a low pass filter having a specific Q-value, a particulate matter can accurately be detected, thereby completing the present invention. According to the present invention, a particulate matter detection device is provided as follows.

[1] A particulate matter detection device comprising: a plate-like element base material; a pair of measurement electrodes arranged in the element base material; characteristics measurement means for measuring electric characteristics between the pair of measurement electrodes; and particulate matter amount calculation means for calculating an amount of a particulate matter collected in and around the pair of measurement electrodes on the basis of a change amount of the electric characteristics measured by the characteristics measurement means, wherein the characteristics measurement means includes a voltage applying circuit which applies a voltage signal having a specific frequency to one measurement electrode of the pair of measurement electrodes, a current-voltage conversion circuit connected to the other measurement electrode of the pair of measurement electrodes, a detection circuit which decomposes an output of the current-voltage conversion circuit into orthogonal components by synchronous wave detection of two or more phases, to detect the output, and two or more calibration elements electrically connected to the voltage applying circuit and the current-voltage conversion circuit in parallel with the pair of measurement electrodes, respectively, and in a state where the calibration elements and the pair of measurement electrodes are switchable, a voltage signal output from the voltage applying circuit and having the specific frequency has a sine wave obtained by tuning a voltage signal of a square wave with a low pass filter having a quality factor value which is from 1.5 to 3, the two or more calibration elements are elements having different phases, respectively, and the characteristics measurement means calculates a calibration matrix Q of the current-voltage conversion circuit from two or more calibrating detection values measured by using the two or more calibration elements, respectively, and true values to be originally obtained by the two or more calibration elements, to calibrate a measurement detection value measured between the pair of measurement electrodes, by use of the calculated calibration matrix Q.

[2] The particulate matter detection device according to the above [1], wherein the detection circuit synchronously detects a phase and an amplitude of the voltage signal output from the current-voltage conversion circuit and having the specific frequency.

[3] The particulate matter detection device according to the above [1] or [2], wherein the detection value detected by the detection circuit is divided into an electrostatic capacity component and a resistance component, to perform the calculation of the calibration matrix Q and the calibration of the measurement detection value.

[4] The particulate matter detection device according to any one of the above [1] to [3], wherein at least one of the two or more calibration elements is a capacitor, and the other calibration element is a resistor.

[5] The particulate matter detection device according to any one of the above [1] to [4], wherein the calibration matrix Q in a case where the two calibration elements are used is a calibration matrix of the following equation (1), the true value of one calibration element A of the calibration elements to be originally obtained is $(X_{01}, Y_{01})$, the true value of the other calibration element B to be originally obtained is $(X_{02}, Y_{02})$, the calibrating detection value detected by using the one calibration element A is $(X_1, Y_1)$, and the calibrating detection value detected by using the other calibration element B is $(X_2, Y_2)$, and in this case, the calibration matrix Q is calculated from the following equation (2), and a calibrated detection value $(X_C, Y_C)$ calibrated from a measurement detection value $(X_M, Y_M)$ is calculated by the following equation (3).

[Equation 1]

$$\text{calibration matrix Q} = \begin{bmatrix} A & B \\ C & D \end{bmatrix} \cdots (1)$$

[Equation 2]

$$\begin{bmatrix} X1 & X2 \\ Y1 & Y2 \end{bmatrix} = \begin{bmatrix} A & B \\ C & D \end{bmatrix} \begin{bmatrix} X01 & X02 \\ Y01 & Y02 \end{bmatrix} \cdots (2)$$

[Equation 3]

$$\begin{bmatrix} X_C \\ Y_C \end{bmatrix} = \begin{bmatrix} A & B \\ C & D \end{bmatrix}^{-1} \begin{bmatrix} X_M \\ Y_M \end{bmatrix} \cdots (3)$$

In the particulate matter detection device of the invention according to the above [1], a calibration matrix Q of characteristics measurement means including a sensor circuit is calculated from each detection value (i.e., the calibrating detection value) using two or more different calibration elements and original values of the calibration elements (i.e., true values to be originally obtained), by a remarkably simple method such as simple four-rules of arithmetic, whereby an actually detected value can be calibrated by the calibration matrix Q. Therefore, a particulate matter can accurately be detected by using the sensor circuit having a simple constitution. That is, it is possible to perform measurement (the detection of the particulate matter) with an accuracy which is equivalent to an accuracy in a case where, for example, a comparatively expensive sine-wave generation circuit or a processing device enabling high-level calculation is used, by use of a comparatively inexpensive square-wave generation circuit and without requiring any high-level processing device even in each calculation for performing calibration.

In the particulate matter detection device of the invention according to the above [2], a detection circuit simultaneously detects a phase and an amplitude of a voltage signal output from a current-voltage conversion circuit and having a specific frequency. Therefore, when electric characteristics measured by a pair of measurement electrodes are electrostatic capacities, a particulate matter can be detected with a high sensitivity.

In the particulate matter detection device of the invention according to the above [3], it is possible to calculate, by a remarkably simple method, a calibration matrix Q which can perform more correct calibration (correction).

In the particulate matter detection device of the invention according to the above [4], it is possible to use easily available and inexpensive members as calibration elements. Moreover, electric characteristics of the respective calibration elements are utilized, whereby it is possible to obtain the calibration matrix Q which can be applied to a broad measurement range.

The particulate matter detection device of the invention according to the above [5] can obtain the calibration matrix Q by remarkably simple four-rules of arithmetic, and can simplify labor for calibrating (correcting) an actually detected value (i.e., the labor of the calculation concerning the calibration). Needless to say, even the obtained calibrated detection value has reliability, and the particulate matter can accurately be detected. It is to be noted that the invention according to claims 1 to 5 corresponds to the invention described in the above [1] to [5].

BRIEF DESCRIPTION OF THE DRAWINGS

Fig. 1A is an exemplary diagram schematically showing a constitution of an embodiment of a particulate matter detection device of the present invention;

Fig. 1B is an exemplary diagram showing a state where a calibrating detection value of a calibration element A is measured in the particulate matter detection device shown in Fig. 1A;

Fig. 1C is an exemplary diagram showing a state where a calibrating detection value of a calibration element B is measured in the particulate matter detection device shown in Fig. 1A;

Fig. 1D is an exemplary diagram showing a state where a measurement detection value is measured by a pair of measurement electrodes in the particulate matter detection device shown in Fig. 1A;

Fig. 2 is a block diagram schematically showing a constitution of a circuit in a particulate matter detection device of Example 1; and

Fig. 3 is a block diagram schematically showing a constitution of a circuit in a particulate matter detection device of Comparative Example 1.

DESCRIPTION OF THE PREFERRED EMBODIMENTS

Hereinafter, a mode for carrying out the present invention will specifically be described, but it should be understood that the present invention is not limited to the following embodiments and changes, modifications and the like of design can appropriately be added thereto on the basis of the ordinary knowledge of a person skilled in the art without departing from the scope of the present invention.
[1] Particulate Matter Detection Device:

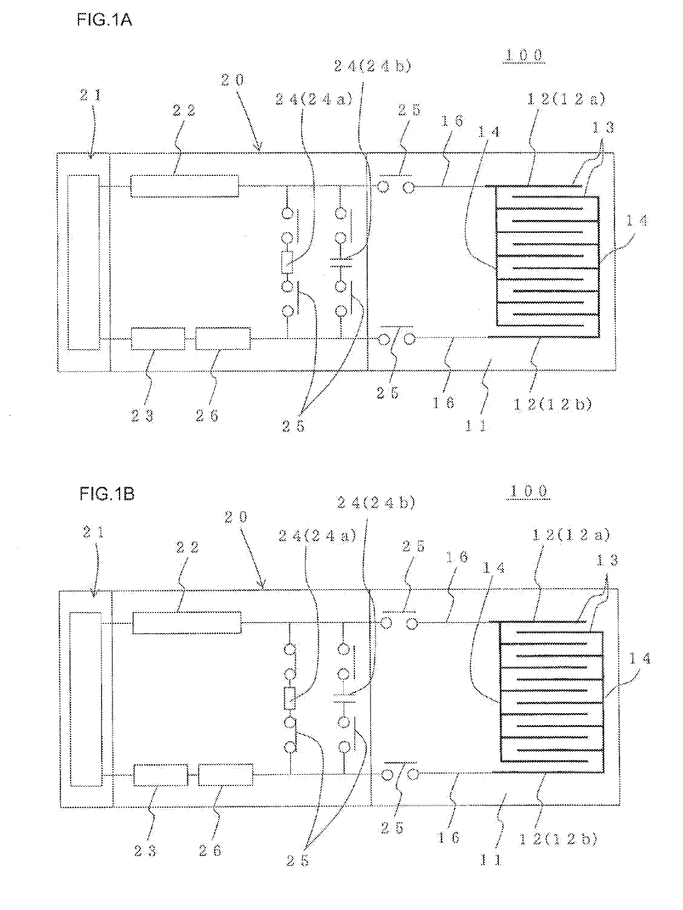

As shown in Fig. 1A, an embodiment of a particulate matter detection device of the present invention is a particulate matter detection device 100 including a plate-like element base material 11; a pair of measurement electrodes 12 (12a and 12b) arranged in the element base material 11; characteristics measurement means 20 for measuring electric characteristics between the pair of measurement electrodes 12a and 12b; and particulate matter amount calculation means 21 for obtaining an amount of a particulate matter collected in and around the pair of measurement electrodes 12a and 12b on the basis of a change amount of the electric characteristics measured by the characteristics measurement means 20. Here, Fig. 1A is an exemplary diagram schematically showing a constitution of the embodiment of the particulate matter detection device of the present invention.

Moreover, in the particulate matter detection device 100 of the present embodiment, the characteristics measurement means 20 includes a voltage applying circuit 22 which applies a voltage signal having a specific frequency to one measurement electrode 12a of the pair of measurement electrodes 12a and 12b, a current-voltage conversion circuit 26 connected to the other measurement electrode 12b of the pair of measurement electrodes 12a and 12b, a detection circuit 23 which decomposes an output of the current-voltage conversion circuit 26 into orthogonal components by synchronous wave detection of two or more phases, to detect the output, and two or more calibration elements 24 (in Fig. 1A, two calibration elements 24a and 24b) electrically connected to the voltage applying circuit 22 and the current-voltage conversion circuit 26 in parallel with the pair of measurement electrodes 12a and 12b, respectively, and in a state where the calibration elements and the pair of measurement electrodes 12a and 12b are switchable.
Furthermore, a voltage signal output from the voltage applying circuit 22 and having the specific frequency has a sine wave obtained by tuning a voltage signal of a square wave with a low pass filter having a quality factor value (hereinafter also referred to as "the Q-value") which is from 1.5 to 3. Moreover, the two or more calibration elements 24 (i.e., in Fig. 1A, the two calibration elements 24a and 24b) are elements having different phases, respectively.
In the particulate matter detection device 100 of the present embodiment, the characteristics measurement means 20 calculates a calibration matrix Q of the current-voltage conversion circuit 26 from two or more calibrating detection values measured by using the two or more calibration elements 24a and 24b, respectively, and true values to be originally obtained by the two or more calibration elements, whereby it is possible to calibrate a measurement detection value measured between the pair of measurement electrodes 12a and 12b by use of the calculated calibration matrix Q.
That is, the particulate matter detection device 100 of the present embodiment calculates the calibration matrix Q of the characteristics measurement means 20 including a sensor circuit from the detected values obtained by using the two or more different calibration elements 24a and 24b (i.e. the calibrating detection values detected via the respective calibration elements), and the original values of the calibration elements (i.e., the true values of the calibration elements to be originally obtained, i.e., the detected values obtained when the values are measured in a state where an error of the voltage signal or the circuit is not included), by a remarkably simple method, specifically by simple four-rules of arithmetic, whereby the actually detected value can be calibrated by the calibration matrix Q.
Therefore, the particulate matter can accurately be detected by using the sensor circuit having a simple constitution (i.e., the voltage applying circuit 22 using an inexpensive square-wave generation circuit and a low pass filter, and an inexpensive calculation processing device which sufficiently enables the four-rules calculation). For example, the particulate matter detection device of the present embodiment can perform the measurement (the detection of the particulate matter) with an accuracy which is equivalent to an accuracy of a case where the calibration is performed by using a comparatively expensive sine-wave generation circuit or a processing device which enables high-level calculation.

Here, a detection method of the particulate matter by the particulate matter detection device of the present embodiment will be described in more detail.

The particulate matter detection device of the present embodiment is originally installed in a through channel through which a measurement object gas such as an exhaust gas passes, allows the particulate matter included in the measurement object gas to adhere (collect) to and around the pair of measurement electrodes 12a and 12b, and measures a change of the electric characteristics between the pair of measurement electrodes 12a and 12b by the characteristics measurement means 20. Furthermore, the device obtains the amount (e.g., a mass) of the collected particulate matter by the particulate matter amount calculation means 21 on the basis of the change amount of the electric characteristics measured by the characteristics measurement means 20.

When the particulate matter is detected in this manner, more accurate measurement is demanded. Moreover, it is also requested to manufacture the detection device itself at low cost. However, the higher performance and accuracy an electronic component or a signal generation circuit for use in the detection device has, the more expensive the component or the circuit usually becomes. When the accurate measurement is requested, the cost inevitably becomes comparatively high. Moreover, when a comparatively-low-cost detection device is requested, the measurement accuracy has been considered to inevitably comparatively drop. That is, in the conventional particulate matter detection device, the constitution of the device has been determined in accordance with a balance between the manufacturing cost and the measurement accuracy.

The particulate matter detection device of the present embodiment produces noticeable effects that the voltage applying circuit has a constitution using comparatively inexpensive members and the calibration matrix Q for calibrating the detected value can be obtained by a remarkably simple method (simple calculation).

When the calibration matrix Q is calculated, the matrix is obtained from two or more calibrating detection values measured by using two or more calibration elements, respectively, and true values to be originally obtained by the two or more calibration elements. For example, the calibration matrix Q in a case where two calibration elements are used is a calibration matrix of the following equation (1), the true value of one calibration element A of the calibration elements to be originally obtained is (X01, Y01), the true value of the other calibration element B to be originally obtained is (X02, Y02), the calibrating detection value detected by using the one calibration element A is (X1, Y1), and the calibrating detection value detected by using the other calibration element B is (X2, Y2). In this case, the calibration matrix Q is calculated from the following equation (2), and a calibrated detection value $(X_C, Y_C)$ calibrated from a measurement detection value $(X_M, Y_M)$ can be calculated by the following equation (3) .

[Equation 4]

$$\text{calibration matrix } Q = \begin{bmatrix} A & B \\ C & D \end{bmatrix} \cdots (1)$$

[Equation 5]

$$\begin{bmatrix} X1 & X2 \\ Y1 & Y2 \end{bmatrix} = \begin{bmatrix} A & B \\ C & D \end{bmatrix} \begin{bmatrix} X01 & X02 \\ Y01 & Y02 \end{bmatrix} \cdots (2)$$

[Equation 6]

$$\begin{bmatrix} X_C \\ Y_C \end{bmatrix} = \begin{bmatrix} A & B \\ C & D \end{bmatrix}^{-1} \begin{bmatrix} X_M \\ Y_M \end{bmatrix} \quad \cdots \quad (3)$$

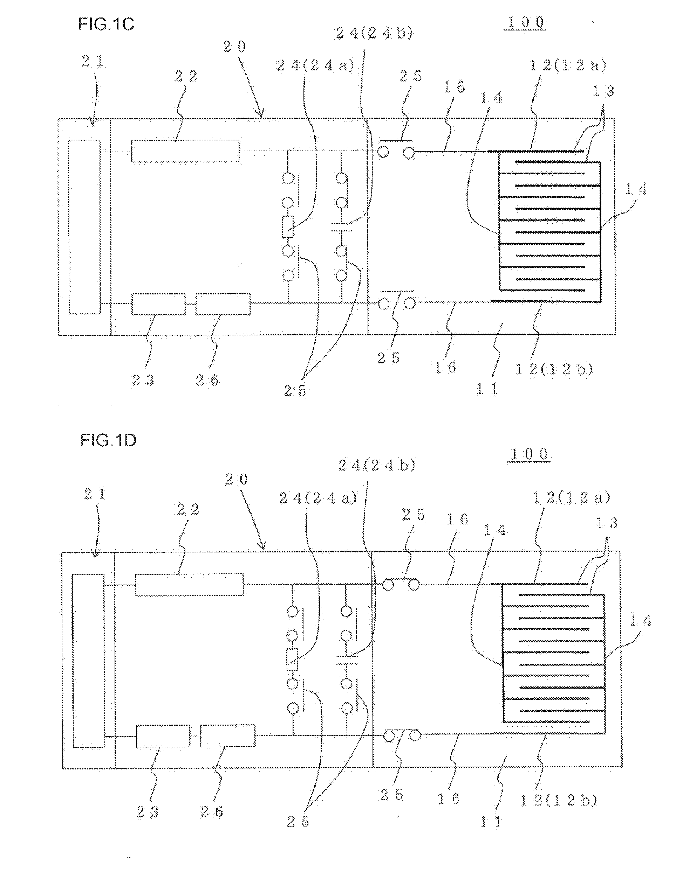

It is to be noted that in the particulate matter detection device 100 shown in Fig. 1A, when the calibrating detection value (X1, Y1) is obtained by using the one calibration element A, for example, as shown in Fig. 1B, changeover switches 25 connected to the calibration elements 24a and 24b and the pair of measurement electrodes 12a and 12b set a state where the electric characteristics of the calibration element A (in Fig. 1B, the calibration element 24a) can be detected. On the other hand, when the calibrating detection value (X2, Y2) is obtained by using the other calibration element B, as shown in Fig. 1C, the changeover switches 25 set a state where the electric characteristics of the calibration element B (in Fig. 1C, the calibration element 24b) can be detected.

Moreover, concerning the respective calibration elements, a highly reliable device beforehand detects the electric characteristics in the same manner as in the calibrating detection values, and obtains the true values to be originally obtained, to calculate the calibration matrix Q represented by the equation (1) from the calibrating detection values detected in the states of Fig. 1B and Fig. 1C and the true values. It is to be noted that the calculation of the equation (2) uses a simple linear equation (a simultaneous equation) in which the calibration matrix Q is a solution, and can be performed for a short time, even if any high-level calculation processing device is not used.

After obtaining the calibration matrix Q in this manner, as shown in Fig. 1D, by the changeover switches 25, the electric characteristics between the pair of measurement electrodes 12a and 12b are measured to obtain the measurement detection value $(X_M, Y_M)$, and the obtained measurement detection value $(X_M, Y_M)$ is calibrated by the calibration matrix Q to calculate the calibrated detection value $(X_C, Y_C)$ in accordance with the equation (3). The equation (3) is also a simple linear equation, and can easily be calculated for a remarkably short time in the same manner as in the calculation of the equation (2).

By use of the calibrated detection value $(X_C, Y_C)$ obtained in this manner, the particulate matter amount calculation means calculates the amount of the particulate matter adhering to the pair of measurement electrodes.

In the conventional particulate matter detection device, the above calibration (correction) is not performed. Therefore, the amount of the particulate matter is calculated by using the measurement detection value $(X_M, Y_M)$. When the particulate matter in the exhaust gas is continuously detected, however, it is remarkably difficult to perform correct measurement, for example, owing to a large influence of a temperature change in measurement environment or the like.

Since the particulate matter detection device of the present embodiment can remarkably simply calculate the calibration matrix Q for a short time as described above, it is possible to obtain, for example, the calibration matrix Q which is suitable for the state in accordance with the change of the measurement environment for each measurement of the measurement detection value as needed. In consequence, the particulate matter can accurately be detected. It is to be noted that the case where two calibration elements are used has been described above, but the calibration may be performed by using three or more calibration elements. In this case, an error component is conceived and an optimization problem is solved so as to minimize the error, whereby calibration accuracy can further be enhanced.

In addition to the case where the calibration matrix Q is obtained by two or more calibration elements as described above, for example, it has heretofore been known that a detected detection value (e.g., impedance) is decomposed into a real-number component and an imaginary-number component and each component is subjected to the calculation of square root ( $\sqrt{\phantom{x}}$ ), arctangent ($\tan^{-1}$), sine (sin) or cosine (cos) for the correction and the like, to calibrate (correct) the detected value. Such a method requires the high-level calculation of the arctangent or the like, and a load on the calculation processing device becomes large. Therefore, when the calibration is performed for each measurement, an expensive calculation processing device having a remarkably high performance has to be used.

It is to be noted that the particulate matter detection device of the present embodiment also has important characteristics that a voltage signal output from the voltage applying circuit and having a specific frequency has a sine wave obtained by tuning a voltage signal of a square wave with a low pass filter having a quality factor value (the Q-value) which is from 1.5 to 3.

It has heretofore been known that the sine wave obtained by tuning the voltage signal of the square wave with the low pass filter is used, but an amplitude change of the sine wave or a phase change between a reference signal and the sine wave occurs to deteriorate the measurement accuracy. Therefore, the importance of the calibration of the detected value increases, and it has been remarkably difficult to also use the above conventional calculation method which requires the high-level calculation. Especially in the particulate matter detection device for a car, the temperature of the environment drastically changes, and hence for the cost reduction of the device, it is considered to be difficult to use the sine wave tuned with the low pass filter.

In the particulate matter detection device of the present embodiment, since the calibration matrix Q is calculated by using two or more calibration elements as described above, the calibration of the detected value does not require any high-level calculation. Therefore, it is possible to use the sine wave tuned with the low pass filter, which has heretofore been avoided in the particulate matter detection device. In particular, when the low pass filter having a quality factor value which is from 1.5 to 3 is used, a circuit scale can be minimized.

The particulate matter detection device of the present embodiment can have a constitution similar to the conventional particulate matter detection device except that the calibration matrix Q is calculated by using the voltage applying circuit which applies the voltage signal having the specific frequency, and two or more calibration elements, to calibrate the measurement detection value.

It is to be noted that as the detection circuit for use in characteristics measurement means, there can preferably be used a circuit which simultaneously detects a phase and an amplitude of the voltage signal output from the current-voltage conversion circuit and having the specific frequency. According to such a constitution, when the electric characteristics measured by the pair of measurement electrodes are electrostatic capacities, the particulate matter can be detected with a high sensitivity.

Moreover, the detection value detected by the detection circuit is preferably divided into an electrostatic capacity component and a resistance component, to perform the calculation of the calibration matrix Q and the calibration of the measurement detection value. That is, in the equation (2), for example, X1 of the calibrating detection value (X1, Y1) is preferably the electrostatic capacity component, whereas Y1 is preferably the resistance component. According to such a constitution, it is possible to calculate the calibration matrix Q which can perform more correct calibration (correction), by a remarkably simple method.

When two or more calibration elements for use in the particulate matter detection device of the present embodiment are elements having different phases, there is not any special restriction on the constitution of each calibration element, but the calibration elements preferably have a phase difference of, for example, 45 or more degrees. As such a calibration element, a capacitor can preferably be used, because the particulate matter detection device includes the circuit which mainly measures the electrostatic capacity. Specifically, among the two or more calibration elements, at least one calibration element is further preferably the capacitor, whereas the other calibration element is a resistor.

When the particulate matter is detected by using, for example, the particulate matter detection device 100 shown in Fig. 1A and the following operations (A) to (E) are repeatedly performed, the particulate matter can correctly be detected.

> (A) the measurement of the calibration element A (the calibration element 24a)
> (B) the measurement of the calibration element B (the calibration element 24b)
> (C) the calculation of the calibration matrix Q
> (D) the measurement of the particulate matter by the measurement electrodes
> (E) the calibration of the values measured by the measurement electrodes, by the calibration matrix Q (the calculation of the calibrated value)

It is to be noted that "the calibration matrix Q" for use in the above operation (E) is calculated by the above operation (C). Moreover, when the particulate matter is actually detected, the above operations (A) to (C) (i.e., the operation of calculating the calibration matrix Q) are not necessarily performed for each measurement. The measurement may be performed, for example, so that in a predetermined number of measurement times, after the above operation (E), the operation returns to the above operation (D), and the above operations (D) and (E) are repeated as much as the predetermined number of times to return to the above operation (A).

Hereinafter, constituent elements of the particulate matter detection device of the present embodiment will further specifically be described.

[1-1] Element Base Material:

An element base material constitutes a main body of a detection device for arranging a pair of measurement electrodes. This element base material can be made of, for example, a dielectric material, and the pair of measurement electrodes can be arranged (embedded) in the surface or inside of the element base material.

The dielectric material constituting the element base material is preferably at least one selected from the group consisting of, for example, alumina, cordierite, mullite, glass, zirconia, magnesia and titania. Among the materials, alumina can preferably be used. When the element base material made of such a dielectric material is used, the particulate matter detection device has an excellent thermal resistance, dielectric breakdown resisting properties and the like. Here, "the dielectric material" is a substance which is excellent in dielectric properties rather than in conductivity and which behaves as an insulator against a direct-current voltage.

The element base material is preferably a plate-like material which is long in one direction, and in one end of the plate-like element base material which is long in one direction, a pair of measurement electrodes are preferably arranged. According to such a constitution, when the device is inserted into an exhaust gas pipe or the like, it is possible to efficiently sample a particulate matter in an exhaust gas (a measurement object gas).

It is to be noted that "the one end of the element base material" mentioned herein is a region from one tip portion of the element base material to a position corresponding to a length which is 50% of the total length of the element base material. Moreover, "the other end of the element base material" is a region from the other tip portion of the element base material to a position corresponding to a length which is 50% of the total length of the element base material. It is to be noted that the one end of the element base material is preferably a region from the one tip portion of the element base material to a position corresponding to a length which is preferably 40%, and further preferably 30% of the total length of the element base material. Moreover, the other end of the element base material is a region from the other tip portion of the element base material to a position corresponding to a length which is preferably 40%, and further preferably 30% of the total length of the element base material. A position between the one end and the other end of the element base material is a portion obtained by excluding the regions of the one end and the other end from the element base material.

Moreover, when the element base material is the plate-like material which is long in one direction, there is not any special restriction on characteristics such as a thickness and a width of this element base material.

The element base material is preferably obtained by laminating a plurality of tape-like ceramic materials (ceramic sheets). In consequence, the particulate matter detection device can be prepared by laminating the plurality of tape-like ceramic materials while sandwiching electrodes, wires and the like among the materials, whereby the particulate matter detection device can efficiently be manufactured.

[1-2] Measurement Electrode:

At least a pair of measurement electrodes are arranged on the surface of the element base material or in the element base material, to measure a change of electric characteristics occurring when a particulate matter is electrically adsorbed by or around the pair of measurement electrodes.

There is not any special restriction on the pair of measurement electrodes 12a and 12b for use in the particulate matter detection device 100 of the present embodiment, as long as the pair of electrodes are arranged to face each other via a space, but as shown in Fig. 1A, the electrodes are preferably combteeth-like electrodes each including a plurality of planarly arranged combteeth portions 13, and a comb spine portion 14 which connects the plurality of combteeth portions 13 of the measurement electrode 12a or 12b to one another at the ends thereof, and the combteeth portions 13 of the measurement electrodes 12a and 12b are arranged to engage with each other via a space, respectively. According to such a constitution, in addition to the effect of the particulate matter detection device of the present embodiment described above, a sensitivity of the detection device can further be enhanced. That is, when such combteeth-like electrodes are used, a space between the electrodes can be narrowed and made more uniform.

There is not any special restriction on a thickness of each measurement electrode (e.g., the combteeth portions 13 and the comb spine portion 14 in a case where the measurement electrodes are the combteeth-like electrodes), but the thickness is, for example, preferably from 5 $\mu$m to 30 $\mu$m. Moreover, examples of a material of the measurement electrodes include platinum (Pt), molybdenum (Mo) and tungsten (W).

Moreover, the pair of measurement electrodes 12a and 12b of the particulate matter detection device 100 are electrically connected to the characteristics measurement means 20 via a measurement wire 16.

[1-3] Characteristics Measurement Means:

Characteristics measurement means includes a voltage applying circuit which applies a voltage signal having a specific frequency to one measurement electrode of the pair of measurement electrodes, a current-voltage conversion circuit connected to the other measurement electrode of the pair of measurement electrodes, a detection circuit which decomposes an output of the current-voltage conversion circuit into orthogonal components by synchronous wave detection of two or more phases, to detect the output, and two or more calibration elements electrically connected to the voltage applying circuit and the current-voltage conversion circuit in parallel with the pair of measurement electrodes, respectively, and in a state where the calibration elements and the pair of measurement electrodes are switchable.

Moreover, the voltage applying circuit is constituted of a signal generation circuit which emits a voltage signal of a square wave and a low pass filter having a quality factor value (the Q-value) which is from 1.5 to 3, and the circuit can generate a sine wave tuned with the low pass filter.

As the signal generation circuit of the square wave, for example, a timer circuit attached to a calculation processing device is utilized, whereby the square wave having an arbitrary frequency can be generated sometimes. In this case, the timer circuit is preferably utilized from a cost aspect.

Moreover, examples of the low pass filter include sallen-key type and VCVS type secondary low pass filters. It is to be noted that the Q-value of this low pass filter is from 1.5 to 3, but is preferably from 1.6 to 2.8, and further preferably from 1.8 to 2.5. It is to be noted that if the quality factor value (the Q-value) is smaller than 1.5, the filter does not have a sufficient decay amount of a high harmonic component, and it is difficult to generate an adequate sine wave sometimes. If the value is 3 or more, an amplitude change at the time of the deviation of tuning is large, and a calibration amount becomes large sometimes.

The current-voltage conversion circuit is connected to the other measurement electrode of the pair of measurement electrodes, and detects, by the other measurement electrode, a current generated by the voltage applied to the one measurement electrode, to convert the current into the voltage.

There is not any special restriction on the detection circuit, as long as the circuit decomposes the output of the current-voltage conversion circuit into orthogonal components by synchronous wave detection of two or more phases, to detect the output. For example, there can preferably be used a detection circuit which synchronously detects a phase and an amplitude of the voltage signal output from the current-voltage conversion circuit and having a specific frequency. In consequence, when electric characteristics measured by the pair of measurement electrodes are electrostatic capacities, the particulate matter can be detected with a high sensitivity.

More specifically, as the detection circuit, for example, LCR meter 4263B manufactured by Agilent Technologies or the like can be used.

Furthermore, this characteristics measurement means include two or more calibration elements electrically connected to the current-voltage conversion circuit and the detection circuit in parallel with the pair of measurement electrodes, respectively, and in a state where the calibration elements and the pair of measurement electrodes are switchable. The two or more calibration elements are elements having different phases, respectively.

There is not any special restriction on a position where two or more calibration elements are arranged, as long as the elements are arranged in parallel with the pair of measurement electrodes, respectively, and the pair of measurement electrodes and the calibration elements can be switched, but the elements are preferably arranged on the same substrate as a measurement circuit. According to such a constitution, the whole dimension and cost can be minimized. Additionally, as compared with the elements are arranged in the vicinity of the measurement electrodes, the influence of the temperature change can be minimized.

There is not any special restriction on the number of the calibration elements, as long as the number is two or more. However, the calibration matrix Q including two rows and two columns enables the accurate measurement, and hence one particulate matter detection device (in other words, the characteristics measurement means) may have two calibration elements. Needless to say, the device may have three or more calibration elements.

As the calibration element, for example, a capacitor, a resistor, a combination of them or the like can be used. At least one calibration element among the two or more calibration elements is the capacitor, whereas the other calibration element is preferably the resistor.

[1-4] Particulate Matter Amount Calculation Means:

The particulate matter amount calculation means reads a change of electric characteristics occurring when a particulate matter is adsorbed (the change of a detected value), and detects the particulate matter included in an exhaust gas. The particulate matter detection device of the present embodiment does not use the detected value measured by a pair of measurement electrodes (the measurement detection value), but uses a calibrated detection value obtained by calibrating the measurement detection value by a calibration matrix Q (the calibrated detection value), to calculate the particulate matter.

It is to be noted that the particulate matter amount calculation means calculates the particulate matter by use of the calibrated detection value as described above. In addition, as to a constitution to calculate the particulate matter from a certain detected value (the change of the detected value), the particulate matter amount calculation means having a constitution similar to particulate matter amount calculation means used in a heretofore known particulate matter detection device can be used.

[2] Manufacturing Method of Particulate Matter Detection Device:

Next, a method of manufacturing the particulate matter detection device 100 shown in Fig. 1A to Fig. 1D will be described as an example of a manufacturing method of the particulate matter detection device of the present embodiment. It is to be noted that the method of manufacturing the particulate matter detection device of the present invention is not limited to the following manufacturing method.

[2-1] Preparation of Forming Raw Material:

First, a forming raw material for manufacturing the element base material 11 is prepared. Specifically, at least one ceramic raw material (a dielectric raw material) selected from the group consisting of, for example, alumina, a cordierite forming material, mullite, glass, zirconia, magnesia and titania is mixed with another component for use as the forming raw material, to prepare a slurried forming raw material. As the ceramic raw material (the dielectric raw material), the above raw material is preferable, but the raw material is not limited to the above example. As another raw material, a binder, a plasticizer, a dispersant, a dispersion medium or the like is preferably used.

There is not any special restriction on a binder, but an aqueous binder or a nonaqueous binder may be used. As the aqueous binder, methyl cellulose, polyvinyl alcohol, polyethylene oxide or the like can preferably be used, and as the nonaqueous binder, polyvinyl butyral, acrylic resin, polyethylene, polypropylene or the like can preferably be used. Examples of the acrylic resin include (meth)acrylic resin, (meth)acrylic ester copolymer, and acrylic ester-methacrylic ester copolymer.

An amount of the binder to be added is preferably from 3 parts by mass to 20 parts by mass, and further preferably from 6 parts by mass to 17 parts by mass with respect to 100 parts by mass of the dielectric raw material. With such a binder content, when the slurried forming raw material is formed into a green sheet, dried and fired, the generation of cracks or the like can be prevented.

As the plasticizer, glycerin, polyethylene glycol, dibutyl phthalate, di-2-ethyl hexyl phthalate, diisononyl phthalate or the like can be used.

An amount of the plasticizer to be added is preferably from 30 parts by mass to 70 parts by mass, and further preferably from 45 parts by mass to 55 parts by mass with respect to 100 parts by mass of the binder. If the amount is larger than 70 parts by mass, the green sheet becomes excessively soft, and is easily deformed in a step of processing the sheet. If the amount is smaller than 30 parts by mass, the green sheet becomes excessively hard. In this case, when the green sheet is simply bent, the green sheet is cracked, which might deteriorate handling properties.

As an aqueous dispersant, anionic surfactant, wax emulsion, pyridine or the like can be used, and as a nonaqueous dispersant, fatty acid, phosphate ester, synthetic surfactant or the like can be used.

An amount of the dispersant to be added is preferably from 0.5 part by mass to 3 parts by mass, and further preferably from 1 part by mass to 2 parts by mass with respect to 100 parts by mass of the dielectric raw material. If the amount is smaller than 0.5 part by mass, dispersibility of the dielectric raw material lowers sometimes, and cracks or the like are generated in the green sheet sometimes. If the amount is larger than 3 parts by mass, the dispersibility of the dielectric raw material does not change, but impurities during firing increase.

As the dispersion medium, water or the like can be used. An amount of the dispersion medium to be added is preferably from 50 parts by mass to 200 parts by mass, and further preferably from 75 parts by mass to 150 parts by mass with respect to 100 parts by mass of the dielectric raw material.

The above raw materials are sufficiently mixed by use of a pot made of alumina and an alumina ball, to prepare a slurried forming raw material for preparing the green sheet. Moreover, these materials are mixed in a ball mill by use of a mono ball, whereby the forming raw material may be prepared.

Next, the obtained slurried forming raw material for preparing the green sheet is stirred and defoamed under a reduced pressure, and further prepared to obtain a predetermined viscosity. The viscosity of the slurried forming raw material obtained in the preparation of the forming raw material is preferably from 2.0 Pa•s to 6.0 Pa•s, further preferably from 3.0 Pa•s to 5.0 Pa•s, and especially preferably from 3.5 Pa•s to 4.5 Pa•s. When a viscosity range is regulated in this manner, the slurry is preferably easily formed into a sheet-like shape. If the slurry viscosity is excessively high or low, it becomes difficult to form the sheet sometimes. It is to be noted that the viscosity of the slurry is a value measured with a B-type viscosity meter.

[2-2] Forming Processing:

Next, the slurried forming raw material obtained by the above method is formed and processed into a tape-like shape, to prepare a green sheet which is long in one direction. There is not any special restriction on a forming/processing process, as long as the forming raw material can be formed into the sheet-like shape to form the green sheet, and a known process such as a doctor blade process, a press forming process, a rolling process and a calendar rolling process can be used. At this time, a green sheet for forming a through hole is prepared so as to form the through hole when green sheets are laminated. A thickness of the green sheet to be prepared is preferably from 50 $\mu$m to 800 $\mu$m.

On the surface of the obtained green sheet, a pair of measurement electrodes, wires and the like are arranged. As to a conductive paste for forming (printing) the pair of measurement electrodes and the wires, in accordance with materials required for forming the electrodes, the wires and the like, a binder and a solvent such as terpineol are added to powder containing at least one selected from the group consisting of gold, silver, platinum, nickel, molybdenum, and tungsten, and sufficiently kneaded by using a tri-roll mill or the like, whereby the paste can be prepared. The conductive paste formed in this manner and containing the materials required for forming the electrodes, the wires and the like is printed on the surface of the green sheet by use of screen printing or the like, to prepare the electrodes and the wires having predetermined shapes.

[2-3] Firing:

Next, a green sheet laminate is dried and fired to obtain the particulate matter detection device. Further specifically, the obtained green sheet laminate is dried at 60°C to 150°C, and fired at 1200°C to 1600°C to prepare the element base material in which the pair of measurement electrodes are arranged. When the green sheets contain an organic binder, degreasing is preferably performed at 400°C to 800°C before the firing.

[2-4] Preparation of Characteristics Measurement Means

Next, the characteristics measurement means for use in the particulate matter detection device of the present embodiment is prepared. Specifically, the signal generation circuit which emits the voltage signal of the square wave is connected to the low pass filter having a quality factor value (the Q-value) which is from 1.5 to 3, to prepare the voltage applying circuit (the signal generation circuit) which can generate the sine wave obtained by tuning the voltage signal generated from the square-wave signal generation circuit with the low pass filter.

[2-5] Preparation of Particulate Matter Detection Device:

A measurement wire of one measurement electrode disposed in the element base material is electrically connected to the voltage applying circuit, and a measurement wire of the other measurement electrode is electrically connected to the current-voltage conversion circuit. The current-voltage conversion circuit is electrically connected to a detection circuit which decomposes an output of this current-voltage conversion circuit into orthogonal components by synchronous wave detection of two or more phases, to detect the output. Moreover, on the same substrate as this circuit, two or more calibration elements are arranged in parallel with the pair of measurement electrodes, respectively, and in a state where the calibration elements and the pair of measurement electrodes are switchable.

Furthermore, in the detection circuit of the characteristics measurement means, there is disposed the particulate matter amount calculation means for reading an electric signal from the detection circuit to calculate the amount of the particulate matter included in the exhaust gas, to manufacture the particulate matter detection device. It is to be noted that as the particulate matter amount calculation means, the particulate matter amount calculation means used in the heretofore known particulate matter detection device can be used.

[Examples]

Hereinafter, the present invention will further specifically be described with respect to examples, but the present invention is not limited to these examples.

(Example 1)

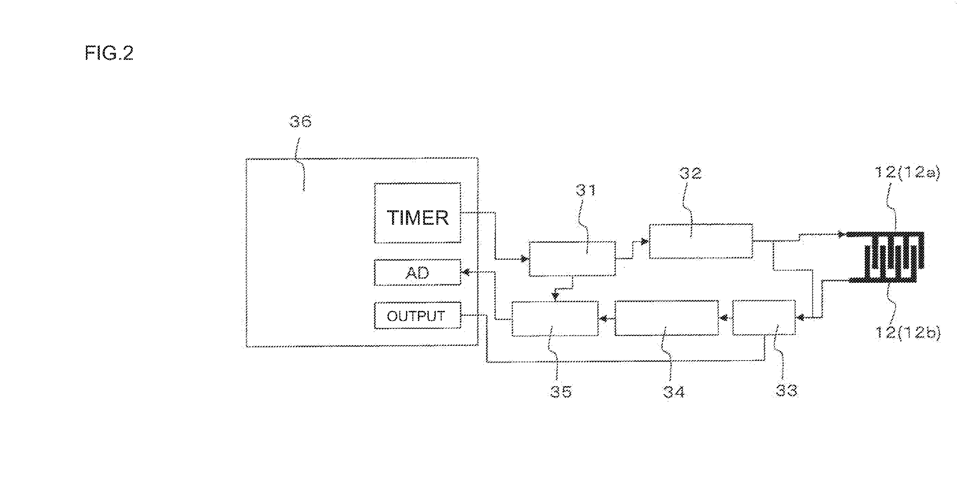

As a particulate matter detection device of Example 1, a particulate matter detection device having a constitution shown in Fig. 2 was prepared. Here, Fig. 2 is a block diagram schematically showing a constitution of a circuit in the particulate matter detection device of Example 1.

As a measuring portion of the particulate matter detection device of Example 1, combteeth-like electrodes each including a plurality of planarly arranged combteeth portions 13 and a comb spine portion 14 connecting the plurality of combteeth portions 13 of a measurement electrode 12a or 12b to one another at the ends thereof were arranged in an element base material 11 made of a dielectric material, to prepare the measuring portion (see Fig. 1A).

Moreover, as to a voltage applying circuit for applying a voltage signal having a specific frequency to the one measurement electrode 12a of the pair of measurement electrodes 12a and 12b, a square-wave generation circuit for generating a voltage signal of a square wave by a divider 31 in accordance with a signal from a timer of a CPU 36 was connected to a low pass filter 32 having a quality factor value of "2" and tuned with a frequency of the generated square wave, to prepare the circuit.

Furthermore, a current-voltage conversion circuit 34 and a detection circuit (a detector 35) for decomposing an output of the current-voltage conversion circuit 34 into orthogonal components by synchronous wave detection of two or more phases to detect the output were connected to the other measurement electrode 12b side of the pair of measurement electrodes 12a and 12b, and connected to an analog-digital converter (the AD converter shown as "AD" in Fig. 2) for converting a signal from the detector 35.

Moreover, two calibration elements (calibration elements 33) having a phase difference of 90 degrees were arranged in a front stage of the current-voltage conversion circuit 34, whereby it was possible to calculate a calibration matrix Q of the current-voltage conversion circuit 34.

As a processing unit (the CPU 36) of a computer for calculating the calibration matrix Q and calibrating a measurement detection value measured by the measurement electrodes to calculate a calibrated detection value, a unit having a processing ability of an 8-bit class was used.

The particulate matter detection device of Example 1 obtained in this manner was used to detect a particulate matter. Specifically, in an exhaust pipe of a 2.2L diesel engine, a broken cylindrical DPF having a diameter of 22 mm was installed, and further on a downstream side thereof, the particulate matter detection device of Example 1 was installed. As a diesel engine, a direct-jet diesel engine was used, and an exhaust gas was generated on operation conditions including a rotation number of 1500 rpm, a torque of 20 N•m, an exhaust gas recirculation (EGR) open degree of 50%, an exhaust gas temperature of 200°C, and suction air of 1.3 m$^3$ (in terms of room temperature)/minute.

(Comparative Example 1)

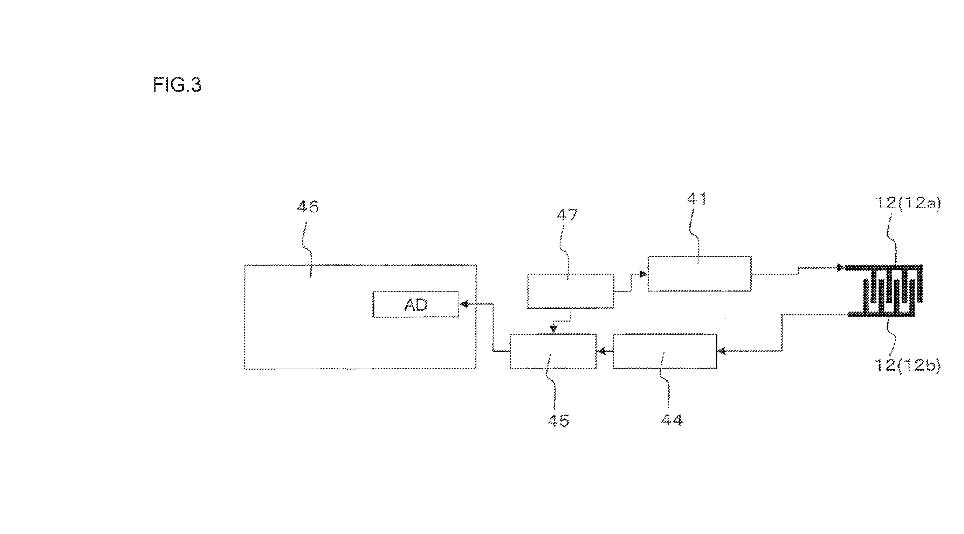

As a particulate matter detection device of Comparative Example 1, a particulate matter detection device having a constitution shown in Fig. 3 was prepared. Here, Fig. 3 is a block diagram schematically showing a constitution of a circuit in the particulate matter detection device of Comparative Example 1.

As a measuring portion of the particulate matter detection device of Comparative Example 1, combteeth-like measurement electrodes 12 having a constitution similar to Example 1 were used.

Moreover, in Comparative Example 1, as a voltage applying circuit, a sine-wave oscillator 41 was used, and connected to one measurement electrode 12a. Moreover, the other measurement electrode was connected to a current-voltage conversion circuit 44 and a detection circuit (a detector 45), and connected to an analog-digital converter for converting a signal from the detector 45 (the AD converter shown as "AD" in Fig. 3). It is to be noted that the sine-wave oscillator 41 and the detector 45 were connected to a comparator 47.

As a processing unit (a CPU 46) of a computer for calculation-processing a detected value measured by the measurement electrodes, a unit of an 8-bit type was used.

(Comparative Example 2)

As a particulate matter detection device of Comparative Example 2, there was prepared a particulate matter detection device in which unlike the device of Example 1, two calibration elements were not used, but one calibration element was used. In Comparative Example 2, as a calibration element, a capacitor was used, and a detected value measured by measurement electrodes was decomposed into a real-current component and an imaginary-number component, to correct an error of the detected value.

Moreover, the particulate matter detection device of Comparative Example 2 was remarkably complicated in the above error correction. Therefore, as a processing unit (a CPU) of a computer, a unit of a 32-bit type was used so that calculation to perform the correction was not obstructed.

It is to be noted that concerning the error correction of the particulate matter detection device of Comparative Example 2, the following method was used. When a detection value detected by a detection circuit is (X3, Y3), an error (an amplitude ratio A and a phase difference θ) between this detection value (X3, Y3) and a value in a case where there is not any error (i.e., a current component (0, Y4) which does not have any error in a case where the capacitor is used as the calibration element) is represented by the following equations (4) and (5).

$$\text{Amplitude ratio A} = Y4/\sqrt{(X3^2+Y3^2)} \ \ldots \ (4)$$

$$\text{Phase difference } \theta = -\pi/2-\tan^{-1}(Y3/X3) \ \ldots \ (5)$$

Then, at the time of the measurement of the calibration element, the above amplitude ratio A and phase difference θ are calculated. At the time of usual measurement, a measured value (X5, Y5) is subjected to the following calculations (6) and (7), to calculate a value obtained by correcting the error of the measured value.

$$\text{Real-number component} = A \bullet \cos\theta \bullet X5 - A \bullet \sin\theta \bullet Y5 \ ... \ (6)$$

$$\text{Imaginary-number component} = A \bullet \sin\theta \bullet X5 + A \bullet \cos\theta \bullet Y5 \ ... \ (7)$$

(Results)

In devices of Example 1 and Comparative Examples 1 and 2, measurement accuracies during the actual measurement of a particulate matter had almost the same degree. However, as compared with the devices of Comparative Examples 1 and 2, the particulate matter detection device of Example 1 could be manufactured by using comparatively inexpensive voltage applying circuit and CPU. Specifically, manufacturing cost of the particulate matter detection device of Example 1 was half of that of the device of Comparative Example 1, and 1/3 of that of the device of the Comparative Example 2.

A particulate matter detection device of the present invention can preferably be utilized to immediately detect the generation of a defect of a DPF, thereby recognizing the abnormality of the device, which can contribute to the prevention of air pollution.

Description of Reference Numerals

11: element base material, 12: pair of measurement electrodes, 12a and 12b: measurement electrode, 13: combteeth portion, 14: comb spine portion, 15: comb spine covering portion, 16, 16a and 16b: measurement wire, 17a and 17b: measurement lead terminal, 18: inflow side, 19: outflow side, 20: characteristics measurement means, 21: particulate matter amount calculation means, 22: voltage applying circuit, 23: detection circuit, 24, 24a and 24b: calibration element, 25: changeover switch, 26: current-voltage conversion circuit, 31: divider, 32: low pass filter, 33: calibration element, 34 and 44: current-voltage conversion circuit, 35 and 45: detector, 36 and 46: CPU, 41: sine-wave oscillator, 47: comparator, and 100: particulate matter detection device.

**Claims**

1. A particulate matter detection device comprising: a plate-like element base material; a pair of measurement electrodes arranged in the element base material; characteristics measurement means for measuring electric characteristics between the pair of measurement electrodes; and particulate matter amount calculation means for calculating an amount of a particulate matter collected in and around the pair of measurement electrodes on the basis of a change amount of the electric characteristics measured by the characteristics measurement means,
wherein the characteristics measurement means includes a voltage applying circuit which applies a voltage signal having a specific frequency to one measurement electrode of the pair of measurement electrodes, a current-voltage conversion circuit connected to the other measurement electrode of the pair of measurement electrodes, a detection circuit which decomposes an output of the current-voltage conversion circuit into orthogonal components by synchronous wave detection of two or more phases, to detect the output, and two or more calibration elements electrically connected to the voltage applying circuit and the current-voltage conversion circuit in parallel with the pair of measurement electrodes, respectively, and in a state where the calibration element and the pair of measurement electrodes are switchable,
a voltage signal output from the voltage applying circuit and having the specific frequency has a sine wave obtained by tuning a voltage signal of a square wave with a low pass filter having a quality factor value which is from 1.5 to 3, the two or more calibration elements are elements having different phases, respectively, and
the characteristics measurement means calculates a calibration matrix Q of the current-voltage conversion circuit from two or more calibrating detection values measured by using the two or more calibration elements, respectively, and true values to be originally obtained by the two or more calibration elements, to calibrate a measurement detection value measured between the pair of measurement electrodes, by use of the calculated calibration matrix Q.

2. The particulate matter detection device according to claim 1, wherein the detection circuit synchronously detects a phase and an amplitude of the voltage signal output from the current-voltage conversion circuit and having the specific frequency.

3. The particulate matter detection device according to claim 1 or 2, wherein the detection value detected by the detection circuit is divided into an electrostatic capacity component and a resistance component, to perform the calculation of the calibration matrix Q and the calibration of the measurement detection value.

4. The particulate matter detection device according to any one of claims 1 to 3, wherein at least one of the two or more calibration elements is a capacitor, and the other calibration element is a resistor.

5. The particulate matter detection device according to any one of claims 1 to 4, wherein the calibration matrix Q in a case where the two calibration elements are used is a calibration matrix of the following equation (1), the true value of one calibration element A of the calibration elements to be originally obtained is (X01, Y01), the true value of the other calibration element B to be originally obtained is (X02, Y02), the calibrating detection value detected by using the one calibration element A is (X1, Y1), and the calibrating detection value detected by using the other calibration element B is (X2, Y2), and in this case, the calibration matrix Q is calculated from the following equation (2), and a calibrated detection value $(X_C, Y_C)$ calibrated from a measurement detection value $(X_M, Y_M)$ is calculated by the following equation (3).

[Equation 1]

$$\text{calibration matrix } Q = \begin{bmatrix} A & B \\ C & D \end{bmatrix} \cdots \text{ (1)}$$

[Equation 2]

$$\begin{bmatrix} X1 & X2 \\ Y1 & Y2 \end{bmatrix} = \begin{bmatrix} A & B \\ C & D \end{bmatrix} \begin{bmatrix} X01 & X02 \\ Y01 & Y02 \end{bmatrix} \cdots \text{ (2)}$$

[Equation 3]

$$\begin{bmatrix} X_C \\ Y_C \end{bmatrix} = \begin{bmatrix} A & B \\ C & D \end{bmatrix}^{-1} \begin{bmatrix} X_M \\ Y_M \end{bmatrix} \cdots \text{ (3)}$$

FIG.1A

FIG.1B

FIG.1C

FIG.1D

FIG.2

EP 2 426 476 A1

FIG.3

12(12a)

12(12b)

41

44

47

45

AD

46

Europäisches Patentamt
European Patent Office
Office européen des brevets

# EUROPEAN SEARCH REPORT

**Application Number**

EP 11 17 9002

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 141 482 A1 (NGK INSULATORS LTD [JP]; HONDA MOTOR CO LTD [JP]) 6 January 2010 (2010-01-06) * paragraph [0120] - paragraph [0129]; figure 19 * * paragraph [0146] * | 1-5 | INV. G01N15/06 |
| A | US 2005/212532 A1 (BERNHARD RUTH [DE]) 29 September 2005 (2005-09-29) * paragraph [0049] * * paragraph [0056] * | 1 | |
| A | SENSENBAUGH ET AL: "Phase Locked Square Wave to Sine Wave Converter", IP.COM JOURNAL, IP.COM INC., WEST HENRIETTA, NY, US, 1 November 1973 (1973-11-01), XP013069373, ISSN: 1533-0001 * the whole document * | 1 | |
| A | EP 2 169 381 A2 (NGK INSULATORS LTD [JP]) 31 March 2010 (2010-03-31) * paragraph [0040] * | 1 | TECHNICAL FIELDS SEARCHED (IPC) G01N |

The present search report has been drawn up for all claims

| Place of search | Date of completion of the search | Examiner |
|---|---|---|
| Munich | 11 January 2012 | Purdie, Douglas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 426 476 A1**

## ANNEX TO THE EUROPEAN SEARCH REPORT
## ON EUROPEAN PATENT APPLICATION NO.

EP 11 17 9002

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2012

| Patent document cited in search report | | Publication date | Patent family member(s) | | Publication date |
|---|---|---|---|---|---|
| EP 2141482 | A1 | 06-01-2010 | EP<br>US | 2141482 A1<br>2010000863 A1 | 06-01-2010<br>07-01-2010 |
| US 2005212532 | A1 | 29-09-2005 | AU<br>DE<br>EP<br>US<br>WO | 2003279330 A1<br>10256064 A1<br>1565735 A1<br>2005212532 A1<br>2004051248 A1 | 23-06-2004<br>17-06-2004<br>24-08-2005<br>29-09-2005<br>17-06-2004 |
| EP 2169381 | A2 | 31-03-2010 | EP<br>JP<br>US | 2169381 A2<br>2010078428 A<br>2010071441 A1 | 31-03-2010<br>08-04-2010<br>25-03-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60123761 A
- JP 2009186278 A
- JP 11271463 A
- JP 2006201129 A
- JP 2010096743 A